# EUROPEAN PATENT APPLICATION

(11) **EP 4 439 145 A1**
(43) Date of publication of application: **02.10.2024**
(21) Application number: 23165028.4
(22) Date of filing: 29.03.2023
(51) Int. Cl.: G02B 7/00

(54) **MOUNT FOR OPTICAL ELEMENTS**

(71) Applicant: Universität Heidelberg, 69117 Heidelberg (DE)
(72) Inventor: KEFER, Oskar, Heidelberg (DE); KOLESNISCHENKO, Pavel, Heidelberg (DE)
(74) Representative: Vossius & Partner Patentanwälte Rechtsanwälte mbB

(57) **Abstract**

The present disclosure relates to a mount for optical elements comprising a housing having a central axis, wherein the housing comprises at least two spaces configured to receive at least two optical elements, wherein the spaces are provided symmetrically to the central axis or equidistant to the central axis, wherein the housing comprises at least two parallel planes, wherein the at least two spaces are provided in different planes, wherein the planes extend in a direction perpendicular to the central axis and are offset to each other in an axial direction.

## Description

The present disclosure relates to a mount for optical elements and in particular to a mount for optical elements for multiple beams aligned in a non-collinear geometry.

Nonlinear optical responses of technological nanomaterials provide a great deal of information about optical and electronic, structural, and compositional, as well as topological properties of matter. The primary tools for measuring nonlinear responses in nanomaterials on ultrafast timescales nowadays are those that use ultrashort optical pulses as part of nonlinear laser spectroscopies. Examples of such spectroscopies include ultrafast transient absorption spectroscopy [1] where two optical pulses are used; four-wave mixing (FWM) spectroscopy [2] where three optical pulses interrogate the sample of interest, and coherent multi-dimensional spectroscopy (CMDS) [3] where four optical pulses are required. The latter is considered as one of the most advanced nonlinear optical spectroscopy techniques that includes multiple light-matter interactions. Different non-collinear geometries of the interrogating pulses offer many advantages, such as spectral-background-free data acquisition, high detection sensitivity and dynamic range, and better selectivity of signal-generation quantum-interference pathways [4]. Especially in Fourier-transform techniques such as CMDS, high phase stability (with an instability tolerance of several nanometers for pulses in the visible) is mandatory, and thus it is beneficial to arrange the laser beams spatially in such a way that they propagate along common optical elements [5]. This limits the spatial distance between the co-propagating laser beams and can be seen as a bottleneck for the performance of a particular optical laser setup.

Often, it is required to control polarisations of laser beams arranged in a non-collinear geometry [6-14]. For example, in transient absorption experiments on liquid solutions of molecular systems, it is necessary to have relative polarisations of the two beams to be at the so-called magic angle (~55 degrees) in order to block any anisotropy-related signals [6]. In CMDS, by combining different four-pulse polarization schemes, one can enhance or isolate signals that may otherwise be obscured. For example, a polarisation sequence of 45° - -45° - 90° - 0° is commonly used to suppress signals that occur in the detection as they would in the excitation axis and to enhance off-diagonal elements of coupling-Hamiltonians [15].

Solid-state nanomaterials, surfaces and some complex molecular systems possess a certain range of symmetries, which can be probed efficiently with different combinations of polarisations of the three or four beams used in a FWM spectroscopy or CMDS [7-14]. The more beams are used in a spectroscopy apparatus, the more challenging it is to organise their individual polarisation-control. One of the solutions to this challenge is to use liquid-crystal spatial-light modulators in a pulse-shaping configuration [16]. However, due to their relatively high costs and non-straightforward programming, this solution is overcomplicated in applications where the main goal is to have control over the beams' polarisations.

In cases where beam geometries are tight, controlling polarisations of each of the beams independently is even more challenging to realise experimentally, as a tight geometric arrangement of laser beams prevents the usage of standard mounts for optical retardation plates (waveplates) and polarisers available on the market since the beam profiles might be affected most harshly by large wavefront errors caused by the edges of optical elements or even cut due to the rims of their respective mounts. Therefore, customised solutions are necessary.

The present invention has been made in view of the above problems. The invention provides a novel design for a holder or mount for optical elements such as waveplates, which is scalable, compact, and stable, and allows control of polarisations of each of the beams individually and independently.

The invention is specified by the independent claims. Preferred embodiments are defined in the dependent claims. In the following description, although numerous features may be designated as optional, it is nevertheless acknowledged that all features comprised in the independent claims are not to be read as optional.

The present disclosure relates to a mount for optical elements comprising a housing having a central axis, wherein the housing comprises at least two spaces configured to receive at least two optical elements, wherein the spaces are provided symmetrical to the central axis or equidistant to the central axis, wherein the housing comprises at least two parallel planes, wherein the at least two spaces are provided in different planes, wherein the planes extend in a direction perpendicular to the central axis and are offset to each other in an axial direction.

Various embodiments may preferably implement the following features.

Preferably, the optical elements are rotationally provided inside the housing.

Preferably, the optical elements are circular and comprise an optical element central axis. Preferably, the optical element central axis extends through the centre of an optical element in a direction perpendicular to the surface thereof (i.e., substantially parallel to an optical axis).

Preferably, the housing comprises at least one receiving slot per plane, the receiving slots being open in a radial direction and extending in a circumferential direction with respect to an optical element central axis, wherein the slots are configured to receive the optical elements.

Preferably, the receiving slots are symmetrically distributed along a circumference perimeter with respect to the central axis. That is, the receiving slots may be equidistantly distributed around the outer circumference of the housing.

Preferably, the mount comprises at least two holders configured to receive respective optical elements, wherein the holders are configured to be placed in the at least two spaces.

Preferably, the housing comprises guiding slots configured to receive corresponding guiding protrusions provided on the holders, wherein the guiding slots extend in a circumferential direction with respect to the optical element central axis and are configured to guide rotational movement of the holders.

Preferably, the holders comprise respective handles configured to manipulate and/or rotationally fix the holders.

Preferably, the holders comprise a clamping part configured to rotationally fix the holder with respect to the housing.

Preferably, the clamping part is clamped against an outer circumferential surface of the housing via the handle.

Preferably, the optical elements and/or the holders partially overlap in the axial direction when inserted in the spaces in the different planes.

Preferably, the optical elements are substantially circular and rotatable around a respective optical element central axis.

Preferably, the housing comprises four spaces configured to receive four optical elements, wherein preferably two first spaces are provided in a first plane of the two parallel planes and two second spaces are provided in a second plane of the two parallel planes.

Preferably, the four spaces are circularly arranged and offset by 90° in a circumferential direction.

Preferably, the first and/or second spaces are symmetrically arranged with respect to the central axis.

Preferably, the optical elements are configured to be rotatable by 120° or less.

Preferably, the optical elements are polarisers, waveplates, colour filters, neutral density filters or other means for independent beam control.

Preferably, the housing is cloverleaf shaped.

Preferably, the central axis corresponds to an optical axis.

Other aspects, features, and advantages will be apparent from the summary above, as well as from the description that follows, including the figures and the claims.

The invention will be further described with reference to the drawings.
Fig. 1A shows a front view of a mount according to an embodiment of the present disclosure.
Fig. 1B shows a top view of the mount according to Fig. 1A.
Fig. 2A shows a front view of a housing part according to an embodiment of the present disclosure.
Fig. 2B shows a rear view of the housing part according to Fig. 2A.
Fig. 3 shows an intermediate mount according to an embodiment of the present disclosure.
Figs. 4A and 4B show a holder for an optical element according to an embodiment of the present disclosure.
Fig. 4C shows a clamping part for a holder according to Figs. 4A and 4B.
Fig. 5A shows a schematic view of waveplate holders in an optical path according to the prior art.
Fig. 5B shows a schematic view of waveplate holders in an optical path according to an embodiment of the present disclosure.
Fig. 6 shows exemplary graphs of phase stability of the laser beam passed through an optical system after insertion of the mount according to the present disclosure.

According to the present disclosure, a mount for optical elements comprises a housing 1 having a central axis 11 and at least two parallel planes P1, P2 in which optical elements 3 can be placed. The below detailed description will use an example having four optical elements 3 in two parallel planes, but the present disclosure is not limited thereto. In particular, the following description will refer to a cloverleaf shaped housing 1 having four (receiving) spaces 12 for housing four optical elements 3 and their holders 2, respectively, in two parallel planes P1 and P2. This is merely to illustrate the concept of the present disclosure which may be used in various shapes with various numbers of optical elements and planes.

The optical elements 3 may be, e.g., polarisers, waveplates, colour filters, neutral density filters or other means for independent beam control.

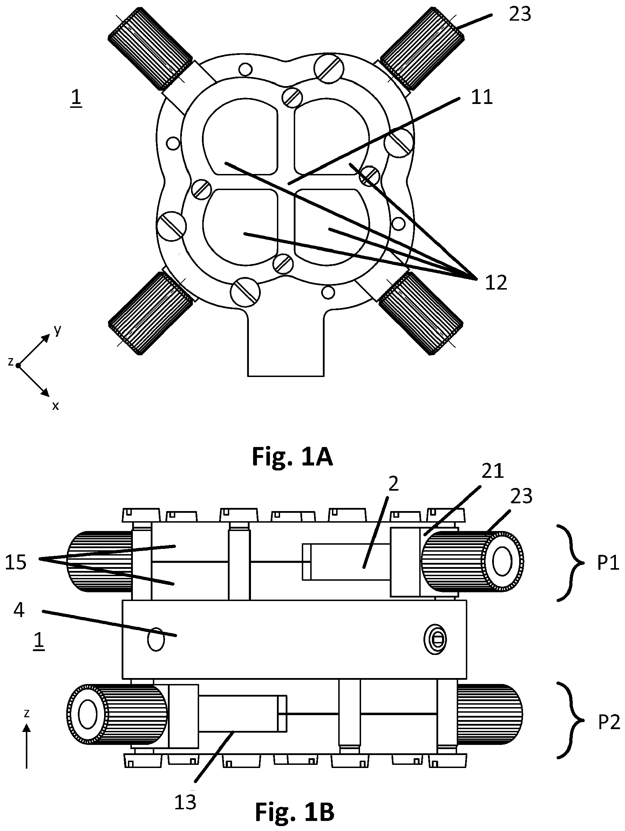

According to an embodiment, the housing 1 comprises at least two spaces 12 configured to receive at least two optical elements 3. The spaces 12 are provided symmetrically to the central axis 11 or equidistant to the central axis 11. The housing 12 comprises at least two parallel planes P1 and P2 as shown in Fig. 1B. The at least two spaces 12 are provided in different planes P1, P2. The spaces 12 may allow light to pass through in the direction of the z-axis, wherein the z-axis defines a direction from one of the planes to another one of the planes, e.g., from the second plane P2 to the first plane P1.

Fig. 1A shows a front view of a mount for optical elements according to an embodiment. The mount comprises a housing 1 having a central axis 11. The central axis 11 extends in the z-direction, i.e., perpendicular to the image plane. In Figs. 1A and 1B, the housing 1 comprises two planes P1, P2 with two spaces 12 each, that is, four spaces 12 in total. The planes P1, P2 extend in a direction perpendicular to the central axis 11, i.e., in the x-y-plane, and are offset from each other in an axial direction (z-direction). In each plane P1 and P2, two spaces 12 may be offset by 180°, in particular symmetrically with respect to the central axis 11. The spaces 12 in the planes P1 and P2 may further be arranged such that the four spaces 12 may be offset by 90° from each other with respect to the central axis 11 and arranged in P1 and P2 in alternating order.

Optical elements 3 (not shown) may be provided in holders 2 which can be introduced into the spaces 12 via receiving slots 13. The receiving slots 13 may be open in a radial direction and extend in a circumferential direction with respect to a respective optical element central axis 31 (not shown) or the circumference of the housing 1. In particular, the receiving slots 13 may be equidistantly distributed around the outer circumference of the housing 1. The holders 2 may comprise respective handles 23 and clamping parts 21 for inserting and fixing the holders 2 in the respective space 12. The holders 2 may be rotated along the respective receiving slots 13.

According to an embodiment, the housing 1 may be formed as a single piece or may comprise two or more subassemblies 15 that are mounted together. According to the following example embodiment, each plane P1, P2 comprises two spaces 12 which are formed between two subassemblies 15.

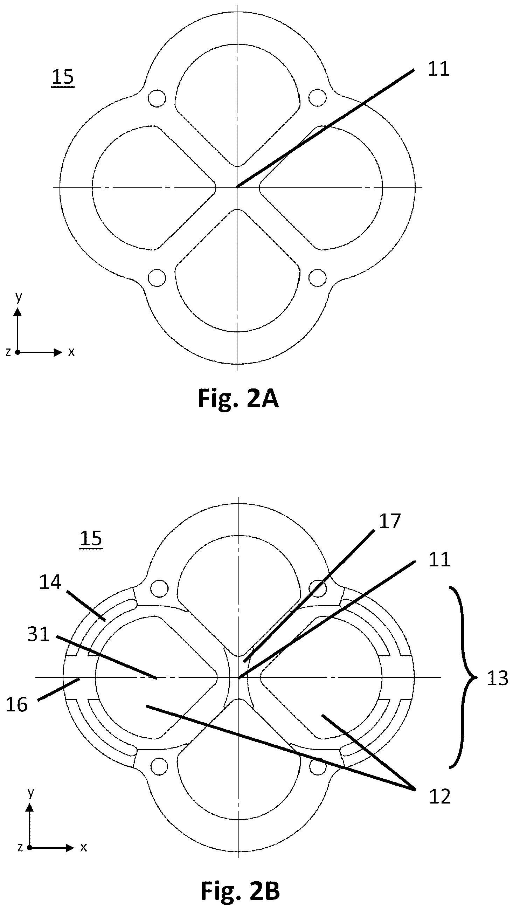

Fig. 2A is a front view of a subassembly 15 of a housing 1 according to an embodiment of the present disclosure and Fig. 2B is a rear view of the subassembly 15 shown in Fig. 2A. As can be seen from the figures, the housing 1 comprises two spaces 12 each configured to receive a respective optical element 3. The spaces 12 are provided symmetrically with respect to a central axis 11 of the housing 1 or equidistant to the central axis 11. In other words, the spaces 12 may be regularly distributed in a circumferential direction with respect to the central axis 11. In particular, the spaces 12 may be mirror-images of each other with respect to the yz-plane.

The subassembly 15 comprises four cut-outs allowing light to pass through. The cut-outs are separated by an x-shaped portion of the subassembly 15 and substantially correspond to the spaces 12.

The spaces 12 may be formed by portions recessed in the z-direction as shown in Fig. 2B such that, when two identical subassemblies 15 are connected, e.g., screwed, glued, snap-fitted or clamped together, with the sides shown in Fig. 2B facing each other, an internal space 12 is formed which can be accessed via a lateral receiving slot 13 (cf. Fig. 1B). In this manner, the first plane P1 may be formed by connecting two subassemblies 15 to each other (see also Fig. 1B).

A centre section 17 may be left and serve as a stop and guidance for the optical elements 3 and their holders 2, respectively. The centre section 17 may spatially separate the holders 2 by serving as an abutment surface. As shown in Fig. 2B, the centre section may be mirror-symmetrical to the yz-plane (or xz-plane, depending on the orientation). The recesses may be formed, e.g., by milling or grinding side walls and internal walls of the subassemblies 15 in the z-direction.

The optical elements 3 may be circular. Moreover, each optical element 3 or the optical element 3 mounted in the holder 2 may be rotatable in the respective space 12 around a central axis 31 of the circular optical element 3 (optical element central axis 31).

The receiving slots 13 may extend in a circumferential direction with respect to the respective optical element central axis 31, i.e., along an outer circumference of the housing 1 (or the subassemblies 15, respectively). The receiving slots 13 may substantially have a rectangular shape when viewed in an inserting direction, e.g., along the x-axis.

A guiding slot 14 interacting with guiding protrusions 22 to be described later may be provided for each space 12. The guiding protrusions 22 may also serve as a stop and guidance for the optical elements 3 and their holders 2, respectively. The guiding slot 14 may be further recessed in the z-direction than the receiving slot 13. The guiding slot 14 may form a circular segment around the central axis 31 of the optical element 3. Thus, the guiding slot 14 may guide rotation of the holder 2, i.e., the optical element 3, around the optical element central axis 31.

The central part of the receiving slot 13 may be further recessed forming an insertion portion 16 and allowing insertion of the holder 2 into the space 12. In particular, the insertion portion 16 may be recessed equal to the guiding slot 14 in the z-direction but also in the radial direction with respect to the optical element central axis 31 (x-direction in Fig. 2B). This will be described in more detail below.

By providing a second pair of subassemblies 15 connected as described above and rotated by 90° with respect to the first pair, the second plane P2 may be formed. In particular, both pairs of subassemblies 15 may be arranged such that the central axes 11 coincide resulting in four spaces 12 each offset by 90° with respect to the (common) central axis 11 and located in the first plane P1 and the second plane P2 in alternating order. The optical element central axes 31 of the four optical elements 3 may thus be arranged at the corners of a square in that embodiment.

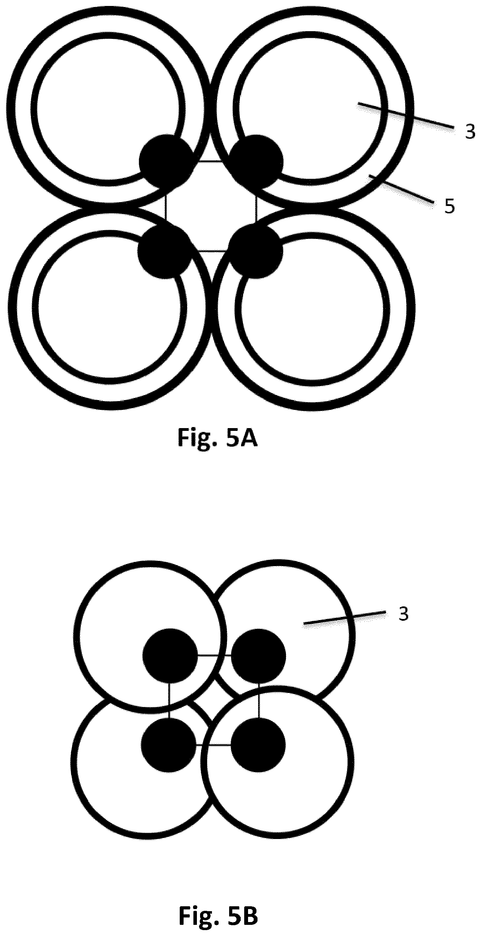

In that way, the holders 2 may partially overlap in the axial direction (z-axis direction) due to the arrangement in different planes P1, P2 and may therefore be positioned closer to each other in the xy-plane. Hence, the problem of a thick rim, as illustrated in Fig. 5A, being positioned in an optical path when using tight beam geometries may be resolved.

According to the embodiment of Figs. 1A and 1B, the housing 1 may comprise four of the subassemblies 15 shown in Figs. 2A and 2B.

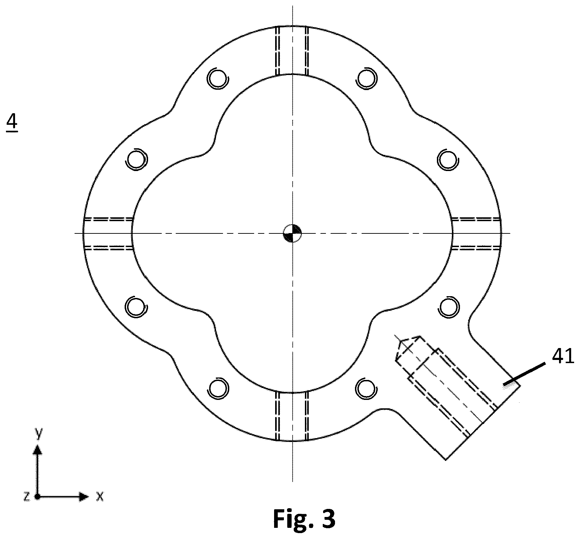

The housing 1 may further comprise an intermediate mount 4 as depicted in Fig. 3. The intermediate mount 4 may be disposed between the planes P1 and P2, i.e., between the pairs of subassemblies 15. The pairs of subassemblies 15 may be connected, e.g., screwed, glued, snap-fitted or clamped, to the intermediate mount 4 on opposing sides thereof as shown in Fig. 1B. The intermediate mount 4 may further comprise a screw thread or the like at a holding fixture 41 for positioning and fixing the mount, e.g., on a stand in an optical path. The intermediate mount 4 comprises at least one cut-out corresponding to the spaces 12 allowing light to pass in the z-direction.

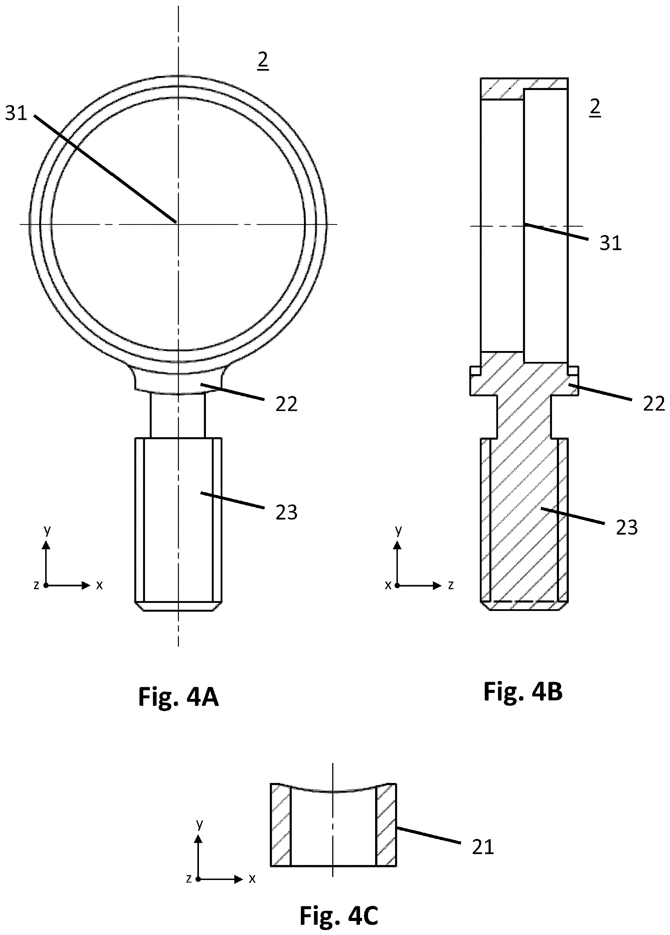

Figs. 4A and 4B show a holder 2 according to an embodiment and Fig. 4C shows a respective clamping part 21. The holder 2 may have a circular reception space for receiving a circular optical element 3 and rotationally fixating it with respect to the holder 2. The optical element 3 may thus be able to rotate together with the holder 2. The holder 2 may further comprise at least one guiding protrusion 22 extending in the positive and/or negative z-axis direction. In a preferred embodiment, the protrusions extend in both the positive and negative z-axis direction. The protrusion 22 may be circularly elongated around the optical element central axis 31 and correspond to the guiding slot 14.

The holder 2 may further comprise a handle 23 for inserting, removing, and rotating the holder 2 and the optical element 3 with respect to the housing 1, in particular the optical element central axis 31. The handle 23 may be a removable part having an internal screw thread interacting with an external thread on an elongated portion of the holder 2 as shown in figures 4A and 4B.

Fig. 4C shows a cross-section of a clamping part 21 according to an embodiment. The clamping part may have substantially rectangular cross-section when viewed in the y-axis direction and have a through hole in the y-axis direction corresponding to the elongated portion of the holder 2. Moreover, the clamping part 21 may have a concave section (arc-shaped section) having a shape corresponding to the shape of the outer circumference of the housing 1. The concave section may thus have a radius corresponding to the outer radius of the housing 1 at the position where the clamping part 21 abuts the housing 1. In case the housing 1 is provided as a cloverleaf shape, the radius of the concave section may correspond to the outer radius of one petal of the cloverleaf to which the clamping part 21 is clamped. The clamping part 21 may thus be positioned between the handle 23 and the guiding protrusion 22. An arc-shaped section as shown in Fig. 4C provides the largest surface contact area between the clamping part 21 and the housing 1, thus making the fixation more robust and stable. This may also contribute to maintaining high phase stability of the pulses.

In particular, the clamping part 21 synergistically with the protrusion(s) 22 and guiding slot(s) 14 may fixate the holder 2 with respect to the housing 1.

The holder 2 having the optical element 3 positioned therein may be inserted through the (lateral) receiving slot 13. During insertion, the guiding protrusion 22 passes through the insertion portion 16 of the receiving slot 13 and abuts the centre portion 17 shown in Fig. 2B. The guiding slot 14 and the guiding protrusion 22 are at the same radial distance with respect to the optical element central axis 31. When the holder 2 is rotated around the optical element central axis 31 via the handle 23, the guiding protrusion 22 may engage the guiding slot 14 for guiding rotational movement of the optical element 3 in the holder 2. The optical element 3 may be rotatable around the optical element central axis 31 by 120° or less. When the desired rotational position is reached, the handle 23 may be screwed tight such that the clamping part 21 is clamped against the outer circumferential surface of the housing 1 (or the respective subassemblies 15), thereby rotationally fixing the optical element 3.

One of the advantages of the present disclosure over the prior art will be described with reference to Figs. 5A and 5B. In the schematic view of Fig. 5A, four holders 5 according to the prior art having optical elements 3 mounted therein are arranged in one plane such that the rims of the holders 5 abut each other. The holders 5 and thus the optical elements 3 are therefore arranged as close as possible in prior art optical mounts. The rims of the holders 5 are indicated as two concentrical circles in Fig. 5A. The four optical beams are indicated by black circles and are arranged as a square. However, in tight beam geometries, the optical beams may hit the rims of the holders 5, making this holder arrangement unsuitable for such tight beam geometries.

By providing the holders 2 (not shown in Fig. 5B) with the optical elements 3 mounted therein in different planes according to an embodiment as described above and shown in Fig. 5B, the holders 2 (and the optical elements 3) can be positioned in a partially overlapping manner and thus moved closer to each other. The outer circle in Fig. 5B indicates the outer circumference of the optical elements 3. The optical beams thus fully pass through the respective optical elements 3, even in tight beam geometries. The compactness of the mount as disclosed herein also aids in maintaining a high phase stability of the beams.

As indicated above, the present disclosure is not limited to a cloverleaf-shaped housing 1 having four optical elements 3 in four spaces 12 in two different planes.

An embodiment presented herein relates to a mount for optical elements 3 comprising a housing 1 having a central axis 11, wherein the housing 1 comprises at least two spaces 12 configured to receive at least two optical elements 3, wherein the spaces 12 are provided symmetrically to the central axis 11 or equidistant to the central axis 11, wherein the housing 1 comprises at least two parallel planes P1, P2, wherein the at least two spaces 12 are provided in different planes P1, P2, wherein the planes P1, P2 extend in a direction perpendicular to the central axis 11 and are offset from each other in an axial direction.

According to an embodiment, the optical elements 3 are rotationally provided inside the housing 1. According to an embodiment, the housing 1 comprises at least one receiving slot 13 per plane, the receiving slots 13 being open in a radial direction and extending in a circumferential direction with respect to the central axis 11 or optical element central axis 31, wherein the receiving slots 13 are configured to receive the optical elements 3. According to an embodiment, the receiving slots 13 are symmetrically distributed along a circumference perimeter with respect to the central axis 11. According to an embodiment, the mount comprises at least two holders 2 configured to receive respective optical elements 3, wherein the holders 2 are configured to be placed in the at least two spaces 12. According to an embodiment, the housing 1 comprises guiding slots 14 configured to receive corresponding guiding protrusions provided on the holders 2, wherein the guiding slots 14 extend in a circumferential direction with respect to an optical element central axis 31 and are configured to guide rotational movement of the holders 2. According to an embodiment, the holders 2 comprise respective handles 23 configured to manipulate and/or rotationally fix the holders 2. According to an embodiment, the holders 2 comprise a clamping part 21 configured to rotationally fix the holder 2 with respect to the housing 1. According to an embodiment, the clamping part 21 is clamped against an outer circumferential surface of the housing 1 via the handle 23. According to an embodiment, the optical elements 3 and/or the holders 2 partially overlap in the axial direction when inserted in the spaces 12 in the different planes P1, P2. According to an embodiment, the optical elements 3 are substantially circular and rotatable around a respective optical element central axis 31. According to an embodiment, the housing 1 comprises four spaces 12 configured to receive four optical elements 3, wherein two first spaces 12 may be provided in a first plane P1 of the two parallel planes P1, P2 and two second spaces 12 are provided in a second plane P2 of the two parallel planes. According to an embodiment, the four spaces 12 are circularly arranged and offset by 90° in a circumferential direction. According to an embodiment, the first and/or second spaces 12 are symmetrically arranged with respect to the central axis 11. According to an embodiment, the optical elements 3 are configured to be rotatable by 120° or less. According to an embodiment, the optical elements 3 are polarisers, waveplates, colour filters, neutral density filters or other means for independent beam control. According to an embodiment, the housing 1 is cloverleaf shaped. According to an embodiment, the central axis 11 corresponds to an optical axis.

As long as beams are symmetrically distributed around the optical axis then the central axis 11 and the optical axis may (substantially) coincide. However, also in the latter case, the optical axis may differ from the central axis 11. If, e.g., in the case of the three beams, they do not represent an equilateral triangle, then the optical axis may be different than the central axis 11. In some cases, the optical axis can be chosen to coincide with one laser beams. Then, the positions of the rest may be defined relative to that one beam.

The present disclosure may further encompass a system comprising a housing 1 as well as a holder 2 and/or an optical element 3 as described above.

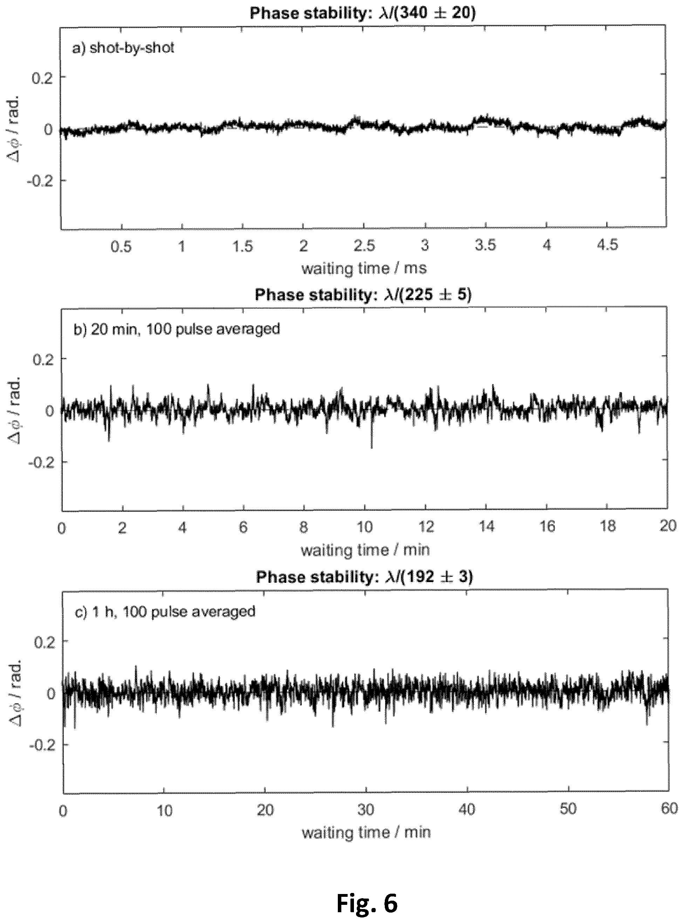

Fig. 6 shows exemplary graphs of the phase stability of an optical system, in particular a CMDS apparatus, using the optics mount as presented herein.

The figure shows relative phases of a CMDS apparatus when the optical mount according to the present disclosure is inserted into the beams and used to set the relative polarization of the beams to 0°. Relative phases are derived from interference due to the spectral overlap between a local oscillator (fourth pulse) and the third-order nonlinear response of a UV-fused silica glass with excitation/emission spectra centered around 590 nm. Phase stabilities (given in the titles of the graphs in Fig. 6) are defined as standard deviations of relative phase fluctuations expressed as wavelength fraction λ/n, where n is a positive real number. These values were retrieved from individual measurements and, for statistical purposes, averaged across several measurements.

Graph a) shows a 5-seconds measurement of phase fluctuations within 5000 consecutive laser pulses with 1 kHz repetition rate of the laser (the retrieved phase stability is averaged over ten measurements).

Graph b) shows a 20-minutes measurement of phase fluctuations, where 100 laser-shots are averaged for each time point (the retrieved phase stability is averaged over five measurements).

In graph c), 1-hour measurements are shown, where 100 laser-shots were averaged for each time-point (the retrieved phase stability is averaged over three measurements).

The following will provide a summary of key aspects of the present disclosure and some of the advantages concomitant therewith.

The present disclosure may, e.g., be used for polarisation control via the rotatable holders (optics mounts which may look like magnifying glasses). A marginal difference between the outer diameter of the holder and the inner diameter of the space they accommodate may be designed. The difference, however, may be large enough to allow the ease of rotatability and small enough to avoid lateral displacements.

The design of the holder may have a larger prominence of the base with a thinner neck. The larger prominence of the optics mount then appears to be inside the main body of the device (where the holder is inserted / slid into), so that the holder cannot fall out for all but a narrow range of angles (<< 1 degree at the insertion portion) within the overall range of up to 120 degrees of rotatability. Since there is a freedom of the relative orientation of the waveplate (or any other optical element) within the holder, the existence of that narrow range of angles (where the optics mount is not lockable) is not an issue. The holder may be locked in position by a screw on the handle of the optics mount and an arc-shaped piece providing sufficient surface area for larger contact friction. The device may be calibratable for convenience and angle ticks or other suitable indicators can be added on the rim of the housing, for example.

The mount also provides for optical phase stability and overall mechanical stability by its compact, sturdy, and symmetric design (so the effects of air currents or other vibrations on the whole device are spatially more correlated across the device) and by everything being locked together. This means that laser beams are affected similarly in case of occasional vibration, and therefore the relative phase between the beams is not changed drastically.

The arc shaped clamping part having a curvature matching that of the housing may provide a larger surface friction area and therefore better grip with the main body (in contrast to a rectangular-shaped loose piece, for example). In an embodiment, aluminium may be used as the main raw material (i.e., for the housing, the holder, the handle, and the clamping part), which has a large friction coefficient.

The present disclosure supports multiple compact beam geometries and is applicable to one, two, three or four beams, or more. In the case of more than four beams, a fifth beam can be outside the housing as well, and all the properties of the beams passing through the device may be defined relative to the first beam. Moreover, there may be also cases where two beams have the same properties, so they may pass through the same optical element.

The beams can be arranged in lines, triangles, trapezoids, boxes, rectangles, rhombuses all of which are also supported since the optical elements are spatially separated (x-y-planes offset in the z-direction) and the optical elements have a finite surface area allowing for these degrees of freedom. Tight geometries which commercial mounts fail to accommodate (even when combined) can be well accommodated by the device. This is achieved by displacing the optical elements along the z-direction which in turn allows to bring the optical elements closer together.

The mount can also be integrated into academic and industrial setups and is compatible with commercial or standard posts which are omnipresent in academic and industrial laboratories.

Due to its compact design, it can be integrated into crowded setups where there is not much space on the optical bench. Moreover, the mount uses aluminium as a cheap raw material and requires relatively low effort (i.e., time/money/human resources) to manufacture.

The dimensions of the device can be adapted and further miniaturised, and the limit is defined by the ability of manufacturing processes. For the same main housing of the device, different optics mounts (holders) could be used in cases where optics exchange is required, without demounting the main body of the device, which makes it convenient to use and in turn can accelerate scientific or industrial processes.

While the fundamental idea of the displacement of the optical elements along the z-axis stays the same, the specifics of the overall design may vary.

Possible applications may include (non-exhaustive list) pump-probe spectroscopy, four-wave mixing spectroscopy, coherent multidimensional spectroscopy, material structuring with more than one beam, independent polarisation control and independent intensity control (by using polarisers instead of waveplates, for example).

As indicated above, the present disclosure is also suitable for tight box-geometries by accommodating two or more optical elements displaced along the z-axis, so that it is possible to bring the optical elements closer to each other. This allows for tight geometric arrangements between the laser beams to be easily dealt with, which in turn can result in adoption of the housing for use not only in research laboratories but more importantly in commercialised nonlinear spectroscopy tools [17-23]. As mentioned above, it is crucial to be able to control polarisations of laser beams independently. The present disclosure takes this demand well into account by allowing the optical elements within the holder to be rotated around their centres over a large range of angles (up to 120°) which enables all kinds of polarisation schemes. Moreover, the easy insertion and removal of the holders (optical mount handles) allows for easy switching between various optical elements on demand and in situ without dismounting the device or its holders. This makes investigation and exploitation of symmetries in a wide variety of samples not only possible but also very convenient.

In cases, where the phase stability is of a higher demand (e.g., in CMDS), the present disclosure is also able to provide optimum results. During development of the housing, the phase stability of an optical system (in particular a CMDS apparatus) when the four beams were passing through the device with the four glass plates inserted was measured greatly above λ/100, as shown in Fig. 6, which is the minimum requirement for CMDS experiments [3]. This high phase stability is owing to the compact and sturdy design of the device. This in turn may be fortified by a symmetric geometry and the ability to lock the holders in position.

The mount according to the present disclosure is of compact dimensions and can be mounted using standard posts available on the market, which makes its integration to commercial and laboratory optical setups seamless and smooth.

Due to the finite area of the four optical apertures, the proposed design of the mount for optical elements (waveplate holder) is not limited to the box-geometry-arrangement of the laser beams and can also handle a variety of other geometries such as lines [1], triangles [24], rhombuses [25], trapezoids, boxes [2,3], rectangles [26], and others, making it useful in a broad range of spectroscopy devices. Finally, in addition to ultrafast spectroscopy techniques, other applications where multiple beams are used are also possible, e.g., in the industrial and scientific processes of structuring materials [26,27].

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

### List of reference signs

- 1: Housing
- 11: Central axis
- 12: Space
- 13: Receiving slot
- 14: Guiding slot
- 15: Housing subassembly
- 16: Insertion portion
- 17: Centre section
- 2: Holder
- 21: Clamping part
- 22: Guiding protrusion
- 23: Handle
- 3: Optical element
- 31: Optical element central axis
- 4: Intermediate mount
- 41: Holding fixture
- 5: Holder according to the prior art
- P1: First plane
- P2: Second plane

### List of references

[1] Berera R et al., Ultrafast transient absorption spectroscopy: principles and application to photosynthetic Systems. Photosynth Res 101,105-118 (2009).
[2] Tolles W.M. et al., A Review of the Theory and Application of Coherent Anti-Stokes Raman Spectroscopy (CARS). Applied Spectroscopy 31(4), 253-271 (1977).
[3] Fuller F.D., Ogilvie J.P., Experimental Implementations of Two-Dimensional Fourier Transform Electronic Spectroscopy. Annual Review of Physical Chemistry 66(1), 667-690 (2015).
[4] Kolesnichenko P.V. et al., Background-free time-resolved coherent Raman spectroscopy (CSRS and CARS); Heterodyne detection of low-energy vibrations and identification of excited-state contributions. APL Photonics 4, 056102 (2019).
[5] Tollerud J.O., Davis J.A., Coherent multi-dimensional spectroscopy: Experimental considerations, direct comparisons and new capabilities. Progress In Quantum Electronics 55, 1-34 (2017).
[6] Schott S. et al., Generalized magic angle for time-resolved spectroscopy with laser pulses of arbitrary ellipticity. J. Phys. B: At. Mol. Opt. Phys. 47, 124014 (2014).
[7] David I. H. Holdaway et al. Isolating the chiral contribution in optical two-dimensional chiral spectroscopy using linearly polarised light. Optics Express 25(6), 6383-6401 (2017).
[8] Fidler A.F. et al., Dynamic localization of electronic excitation in photosynthetic complexes revealed with chiral two-dimensional spectroscopy. Nature Communications 5, 3286 (2014).
[9] Rouxel J.R., et al., Chiral Four-Wave-Mixing Signals with circularly-polarised X-ray pulses. ArXiV: 2007.14531.
[10] Ginsberg, N.S. et al., Solving structure in the CP29 light harvesting complex with polarisation-phased 2D electronic spectroscopy. PNAS 108 (10) 3848-3853 (2011).
[11] Guo L, et al., Exchange-driven intravalley mixing of excitons in monolayer transition metal dichalcogenides. Nature Physics 15, 228-232 (2019).
[12] Hao K. et al., Neutral and charged inter-valley biexcitons in monolayer MoSe2. Nature Communications 8,15552 (2017).
[13] Lloyd L.T., et al., Sub-10 fs Intervalley Exciton Coupling in Monolayer MoS2 Revealed by Helicity-Resolved Two-Dimensional Electronic Spectroscopy. ACS Nano 15(6), 10253-10263 (2021).
[14] Ohnoutek L. et al., Third-harmonic Mie Scattering from semiconductor nanohelices. Nature Photonics 16,126-133 (2022).
[15] Schlau-Cohen, G., Ishizaki, A., Calhoun, T. et al. Elucidation of the timescales and origins of quantum electronic coherence in LHCII. Nature Chem 4, 389-395 (2012).
[16] Brixner T., Gerber G., Femtosecond polarisation pulse shaping. Optics Letters 26(8), 557-559 (2001).
[17] Newport transient absorption spectrometer (https://www.newport.com/f/transient-absorption-spectrometer)
[18] Ultrafast Systems transient absorption spectrometer (https://ultrafast.systems/products/spectrometers-accessories/#spectrometers)
[19] Newport CARS microspectrometer (https://www.newport.com/f/coherent-anti-stokes-raman-scattering-microspectrometer)
[20] Newport PulseScout2 autocorrelator (https://www.newport.com/f/pulsescout2-autocorrelator)
[21] PhaseTech Spectroscopy 2DQuick IR spectrometer (http://phasetechspectroscopy.com/products/2dquickir/)
[22] PhaseTech Spectroscopy 2DQuick Transient pump-probe spectrometer (http://phasetechspectroscopy.com/products/2dquicktransient/)
[23] PhaseTech Spectroscopy 2DQuick Visible spectrometer (http://phasetechspectroscopy.com/products/2dquickvisible/)
[24] Janušonis J. et al., Transient Grating Spectroscopy in Magnetic Thin Films: Simultaneous Detection of Elastic and Magnetic Dynamics. Sci Rep 6, 29143 (2016).
[25] Milota F. et al., Precise phasing of 2D-electronic spectra in a fully non-collinear phase-matching geometry. Opt. Express 21, 15904-15911 (2013).
[26] Schmidt L. et al., Multiple Beam Laser Guidance for Patterning Irregularly Shaped Cells. Front. Phys. 8, 595971 (2020).
[27] Mulko L., et al., Structuring and functionalization of non-metallic materials using direct laser interference patterning: a review. Nanophotonics 11(2), 203-240 (2022).

## Claims

1. Mount for optical elements comprising:
a housing (1) having a central axis (11),
wherein the housing (1) comprises at least two spaces (12) configured to receive at least two optical elements (3),
wherein the spaces (12) are provided symmetrical to the central axis (11) or equidistant to the central axis (11),
wherein the housing (1) comprises at least two parallel planes (P1, P2), wherein the at least two spaces (12) are provided in different planes (P1, P2), wherein the planes (P1, P2) extend in a direction perpendicular to the central axis (11) and are offset to each other in an axial direction.

2. Mount according to claim 1, wherein the optical elements (3) are rotationally provided inside the housing (1).

3. Mount according to claim 1 or 2, wherein the housing (1) comprises at least one receiving slot (13) per plane, the receiving slots (13) being open in a radial direction and extending in a circumferential direction with respect to an optical element central axis (31),
wherein the receiving slots (13) are configured to receive the optical elements (3),
wherein preferably, the receiving slots (13) are symmetrically distributed along a circumference perimeter with respect to the central axis (11).

4. Mount according to any one of claims 1 to 3, wherein the mount comprises at least two holders (2) configured to receive respective optical elements (3), wherein the holders (2) are configured to be placed in the at least two spaces (12).

5. Mount according to claim 4, wherein the housing (1) comprises guiding slots (14) configured to receive corresponding guiding protrusions (22) provided on the holders (2), wherein the guiding slots (14) extend in a circumferential direction with respect to an optical element central axis (31) and are configured to guide rotational movement of the holders (2).

6. Mount according to any one of claims 4 or 5, wherein the holders (2) comprise respective handles (23) configured to manipulate and/or rotationally fix the holders (2).

7. Mount according to claim 6, wherein the holders (2) comprise a clamping part (21) configured to rotationally fix the holder (2) with respect to the housing (1),
wherein preferably, the clamping part (21) is clamped against an outer circumferential surface of the housing (1) via the handle (23).

8. Mount according to any one of claims 1 to 7, wherein the optical elements (3) and/or the holders (2) partially overlap in the axial direction when inserted in the spaces (12) in the different planes (P1, P2).

9. Mount according to any one of claims 1 to 8, wherein the optical elements (3) are substantially circular and rotatable around a respective optical element central axis (31).

10. Mount according to any one of claims 1 to 9, wherein the housing (1) comprises four spaces (12) configured to receive four optical elements (3), wherein preferably two first spaces (12) are provided in a first plane (P1) of the two parallel planes (P1, P2) and two second spaces (12) are provided in a second plane (P2) of the two parallel planes (P1, P2).

11. Mount according to claim 10, wherein the four spaces (12) are circularly arranged and offset by 90° in a circumferential direction.

12. Mount according to claim 10 or 11, wherein the first and/or second spaces (12) are symmetrically arranged with respect to the central axis (11).

13. Mount according to any one of claims 1 to 12, wherein the optical elements (3) are configured to be rotatable by 120° or less.

14. Mount according to any one of claims 1 to 13, wherein the optical elements (3) are polarisers, waveplates, colour filters, neutral density filters or means for independent beam intensity control.

15. Mount according to any one of claims 1 to 14, wherein the housing (1) is cloverleaf shaped.

16. Mount according to any one of claims 1 to 15, wherein the central axis (11) corresponds to an optical axis.
